(19) Europäisches Patentamt
European Patent Office
Office européen des brevets

(11) **EP 1 702 182 B1**

(12) **EUROPEAN PATENT SPECIFICATION**

(45) Date of publication and mention
of the grant of the patent:
**12.05.2010 Bulletin 2010/19**

(21) Application number: **03776053.5**

(22) Date of filing: **04.12.2003**

(51) Int Cl.:
*F24F 12/00* (2006.01)      *F28F 3/00* (2006.01)
*F28F 21/00* (2006.01)      *F28D 9/02* (2006.01)
*D21H 27/00* (2006.01)

(86) International application number:
**PCT/KR2003/002649**

(87) International publication number:
**WO 2005/050099 (02.06.2005 Gazette 2005/22)**

(54) **FUNCTIIONAL PAPER USED IN HEAT EXCHANGER OF VENTILATOR**

IM WÄRMETAUSCHER EINES VENTILATORS VERWENDETES FUNKTIONALES PAPIER

PAPIER FONCTIONNEL UTILISE DANS L'ECHANGEUR DE CHALEUR D'UN VENTILATEUR

(84) Designated Contracting States:
**AT BE BG CH CY CZ DE DK EE ES FI FR GB GR
HU IE IT LI LU MC NL PT RO SE SI SK TR**

(30) Priority: **24.11.2003 KR 2003083546**

(43) Date of publication of application:
**20.09.2006 Bulletin 2006/38**

(73) Proprietor: **LG Electronics, Inc.
Seoul 150-010 (KR)**

(72) Inventors:
• **CHO, Min-Chul
616-830 Busan (KR)**
• **SHIN, Soo-Yeon,
Booyoung Apt. 1202-902,Wolsanmaeul
621-091 Kyungsangnam-Do (KR)**

• **LEE, Seonghwan
c/o Res. Lab.,
Dig.Appl.Company
Kyungsangnam-do, 641-711 (KR)**
• **KIM, Chul-Hwan
660-767 Gyungsangnam-Do (KR)**

(74) Representative: **Office Freylinger
P.O. Box 48
8001 Strassen (LU)**

(56) References cited:
**EP-A2- 1 312 870      JP-A- 11 189 999
JP-A- 59 107 198      US-A- 6 019 170
US-A- 6 145 588**

**EP 1 702 182 B1**

**Description**

TECHNICAL FIELD

The present invention relates to functional paper for a heat exchanger built in a ventilator for externally discharging indoor air and internally sucking outdoor air, for concurrently performing sensible heat and latent heat exchange operations between indoor air and outdoor air, and a heat exchanger of a ventilator using the same.

BACKGROUND ART

In general, the carbon dioxide content of air increases in a hermetically sealed space with the passage of time because of breathing of living objects, and has detrimental effects on breathing. Accordingly, a ventilator is used to exchange contaminated indoor air for fresh outdoor air especially in a narrow space where a number of people stay such as an office or vehicle.

The ventilator includes an air blower for forcibly blowing indoor air and outdoor air, and repeats a process of externally discharging contaminated indoor air and internally sucking fresh outdoor air.

However, when cooling and ventilating operations are performed indoors at the same time, cooled indoor air is exhausted and hot outdoor air is sucked. Thus, a temperature of indoor air is higher than a cooling temperature, to reduce cooling efficiency. In the case that heating and ventilating operations are simultaneously performed indoors, heated indoor air is exhausted and cooled outdoor air is sucked. As a result, the temperature of indoor air is lower than a heating temperature, to reduce heating efficiency.

Therefore, the ventilator further includes a heat exchanger for exchanging heat between indoor air and outdoor air.

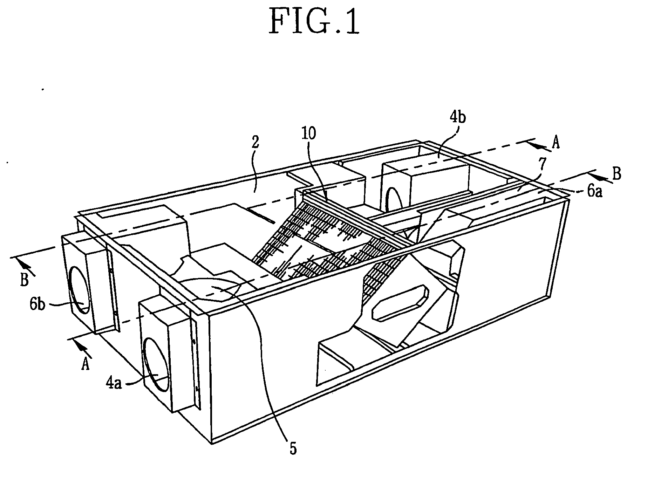

In detail, referring to Fig. 1, a general ventilator includes a casing 2 composing the outer appearance, a heat exchanger 10 installed in the casing 2, for separately flowing indoor air and outdoor air, and exchanging heat between indoor air and outdoor air, an outdoor air suction hole 4a and an outdoor air discharge hole 4b formed on the facing surfaces of the casing 2, for sucking and discharging outdoor air, respectively, an indoor air suction hole 6a and an indoor air discharge hole 6b formed on one sides of the outdoor air suction hole 4a and the outdoor air discharge hole 4b, for sucking and discharging indoor air, respectively, an air supply fan 8 installed inside the outdoor air discharge hole 4b, for internally sucking outdoor air, an air exhaust fan 9 installed inside the indoor air discharge hole 6b, for externally discharging indoor air, and a pre-filter (not shown) installed inside the outdoor air suction hole 4a, for filtering alien substances such as dust from outdoor air.

Here, an outdoor air passage guide 5 is formed between the outdoor air suction hole 4a and the outdoor air discharge hole 4b, so that outdoor air sucked from the outdoor air suction hole 4a can be discharged to the outdoor air discharge hole 4b through the heat exchanger 10, and an indoor air passage guide 7 is formed between the indoor air suction hole 6a and the indoor air discharge hole 6b so that indoor air sucked from the indoor air suction hole 6a can be discharged to the indoor air discharge hole 6b through the heat exchanger 10. The outdoor air suction hole 4a and the indoor air discharge hole 6b are coupled to outdoor ducts (not shown) linked to the outdoor side, and the outdoor air discharge hole 4b and the indoor air suction hole 6a are coupled to indoor ducts (not shown) linked to the indoor side.

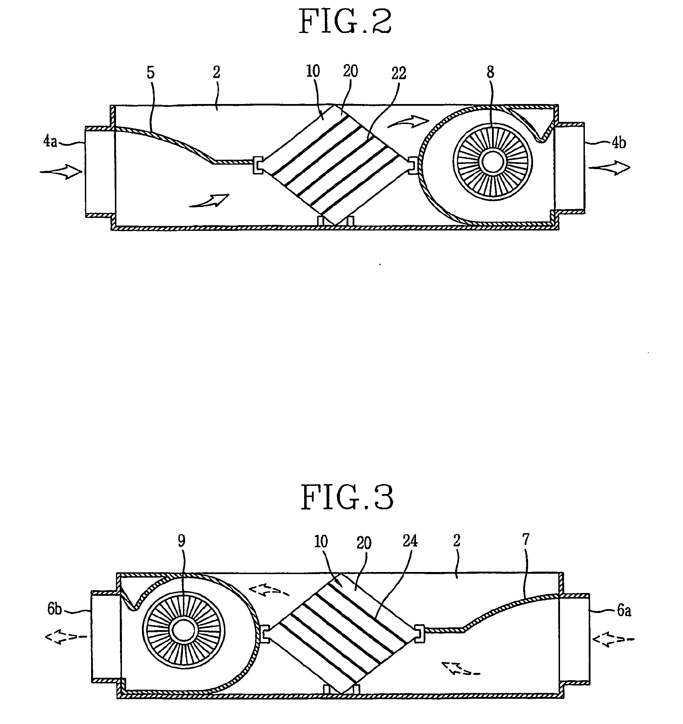

Accordingly, when the air supply fan 8 and the air exhaust fan 9 are operated, as shown in Fig. 2, outdoor air is sucked to the indoor side through the outdoor air suction hole 4a, the heat exchanger 10, the air supply fan 8 and the outdoor air discharge hole 4b, and as shown in Fig. 3, indoor air is discharged to the outdoor side through the indoor air suction hole 6a, the heat exchanger 10, the air exhaust fan 9 and the indoor air discharge hole 6b. That is, indoor air and outdoor air flow through different passages in the heat exchanger 10, to exchange heat.

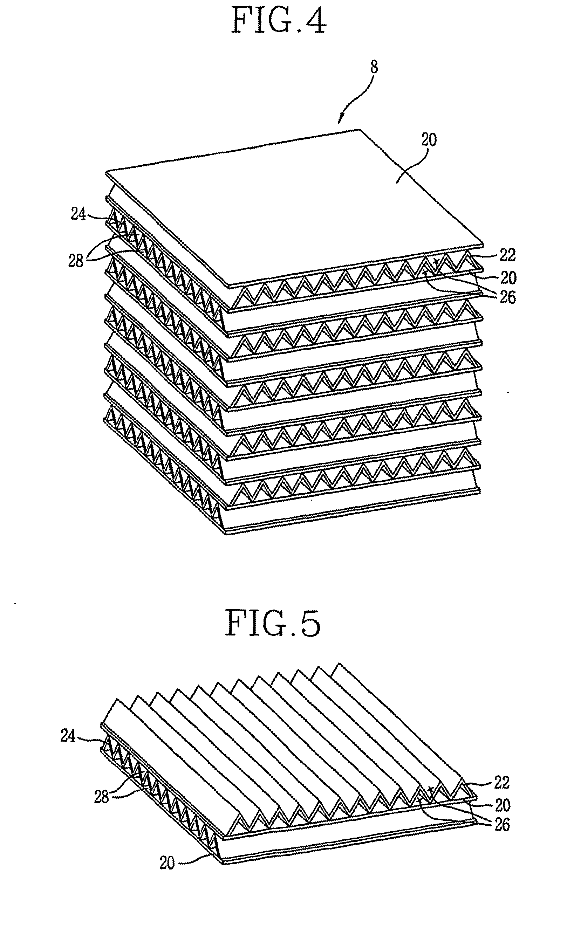

The heat exchanger 10 is formed by alternately stacking a plurality of heat exchange units to separately flow indoor air and outdoor air, thereby exchanging heat between indoor air and outdoor air through heat transfer plates 20. As illustrated in Figs. 4 and 5, first pleat sheets 22 are adhered on the heat transfer plates 20 in one direction to form first air paths 26 which outdoor air passes through, and second pleat sheets 24 are adhered on the heat transfer plates 20 in another direction (for example, vertical direction to the one direction) to form second air paths 28 which indoor air passes through.

The plurality of heat transfer plates 20 are formed in a flat plate shape, for exchanging heat between outdoor air flowing through the first air paths 26 and indoor air flowing through the second air paths 28. In addition, the plurality of first pleat sheets 22 and the plurality of second pleat sheets 24 are generally made of the same material as the heat transfer plates 20, and curved a few times in a triangular waveform shape, to provide passing spaces for indoor air and outdoor air. The rectangular parallelepiped heat exchanger 10 is formed by sequentially stacking the first pleat sheets 22, the heat transfer plates 20 and the second pleat sheets 24 in the vertical directions to each other. Here, outdoor air and indoor air pass through the first and second air paths 26 and 28 formed by the first pleat sheets 22 and the second pleat sheets 24, crossing each other, thereby exchanging heat through the heat transfer plates 20.

However, in the heat exchanger of the conventional ventilator, the heat transfer plates 20, the first pleat sheets 22 and the second pleat sheets 24 are made of aluminum, which efficiency transfers heat but does not normally exchange moisture between indoor air and outdoor air. Accordingly, when the ventilator is used, indoor humidity is varied.

In order to solve the foregoing problem, there have been attempts to apply functional paper known as having a high water vapor transmission rate (WVTR) to the heat transfer plates and/or the pleat sheets. However, paper having a high WVTR also has high air permeability, which is not suitable for the heat transfer plates and/or the pleat sheets.

DISCLOSURE OF THE INVENTION

An object of the present invention is to provide functional paper having excellent air resistance, water vapor transmission efficiency and heat transfer efficiency, which can be used as a material of heat transfer plates and/or pleat sheets for a heat exchanger of a ventilator.

Another object of the present invention is to provide functional paper having antibacterial performance.

In order to achieve the above-described objects of the invention, there is provided functional paper for a heat exchanger of a ventilator, prepared by putting an inner sheet made of 10 to 40% of bleached wood chemical pulp having freeness of 200 to 300mL CSF and 60 to 90% of bleached wood chemical pulp fine powder having freeness below 100mL CSF between outer sheets made of mulberry fibers.

Preferably, the freeness of the bleached wood chemical pulp ranges from 200 to 250mL CSF. In this case, the inner sheet contains 25 to 35% of bleached wood chemical pulp.

Preferably, the freeness of the bleached wood chemical pulp fine powder ranges from 15 to 50mL CSF. More preferably, the freeness of the bleached wood chemical pulp fine powder ranges from 15 to 25mL CSF. In this case, the inner sheet contains 65 to 75% of bleached wood chemical pulp fine powder.

Here, the pulp is bleached hardwood kraft pulp.

In addition, the inner and outer sheets further contain 0.02 to 0.04% of known retention aids to facilitate fixation of fine fibers or powder.

The outer sheets further include an antibacterial agent so that the functional paper can have antibacterial properties. For example, the outer sheets contain 10 to 15% of ocher, 3 to 9% of antibacterial agent made of grapefruit seed extracts, or both.

The inner sheet further includes 0.3 to 0.8% of Alkyl Ketene Dimer to facilitate transmission of moisture by making the surfaces of the fibers of the inner sheet hydrophobic.

According to one aspect of the invention, a heat exchanger of a ventilator includes: heat transfer plates, first air paths which externally-discharged indoor air passes through and second air paths which internally-sucked outdoor air passes through being stacked on the heat transfer plates at predetermined intervals; first pleat sheets adhered to the first air paths, for obtaining passing spaces of outdoor air; and second pleat sheets adhered to the second air paths, for obtaining passing spaces of indoor air, wherein at least one of the heat transfer plates, the first pleat sheets and the second pleat sheets is functional paper prepared by putting an inner sheet made of 20 to 40% of bleached wood chemical pulp having freeness of 200 to 300mL CSF and 60 to 80% of bleached wood chemical pulp fine powder having freeness below 100mL CSF between outer sheets made of mulberry fibers.

BRIEF DESCRIPTION OF THE DRAWINGS

Fig. 1 is a perspective view illustrating the inside of a general ventilator;
Fig. 2 is a cross-sectional view, taken along line A-A of Fig. 1;
Fig. 3 is a cross-sectional view, taken along line B-B of Fig. 1;
Fig. 4 is a perspective view illustrating a heat exchanger of the general ventilator showing the structure of heat transfer plates and pleat sheets;
Fig. 5 is a perspective view illustrating part of Fig. 4;
Fig. 6 is a concept view illustrating the structure of functional paper in accordance with the present invention;
Fig. 7 is an exemplary view illustrating an apparatus for measuring heat transfer exchange efficiency in a heat exchanger of a ventilator using the functional paper in accordance with the present invention;
Figs. 8A and 8B are photographs showing antibacterial test results of the functional paper by a paper disc plate method in accordance with the present invention;
Fig. 9 is an SEM photograph of an inner sheet of the functional paper in accordance with the present invention; and
Figs. 10A and 10B are SEM photographs of an outer sheet of the functional paper in accordance with the present invention.

BEST MODE FOR CARRYING OUT THE INVENTION

The present invention will now be described in more detail on the basis of preferred embodiments. However, it is recognized that the scope of the present invention should not be limited to these preferred embodiments but to the claims as hereinafter recited.

Embodiments

Preparation of Functional Paper

Paper was prepared under TAPPI Standard Method T 200 and T 218. Hardwood kraft pulp was beaten in valley beaters for laboratory to have freeness of 240mL CSF and 20mL CSF, respectively. The hardwood kraft pulp composing an inner sheet of functional paper was intended to improve air resistance of the functional paper. The hardwood kraft pulp fine powder beaten to 20mL CSF and other additives were added to the hardwood kraft pulp beaten to 240mL CSF according to the composition of Table 1, and the resulting substance was made into paper with a basis weight of 40g/m$^2$.

Table 1. Mixing Rates of Composition of Inner Sheet (unit: %)

|  | Hw-BKP (240mL CSF) | Hw-BKP (20mL CSF) | AKD | Ca-PAM |
|---|---|---|---|---|
| No. 1 | 30.60 | 69.08 | 0.3 | 0.02 |
| No. 2 | 16.79 | 82.98 | 0.3 | 0.02 |
| Note: The unit, %, is based on the oven-dried weight (g) of mulberry fibers. | | | | |

Mulberry fibers made in China were cut in about 2cm lengths and evenly disintegrated by a standard disintegrator, ocher and other additives were evenly mixed therewith as shown in Table 2, and the resulting substance was made into paper with a basis weight of 15g/m$^2$, thereby preparing outer sheets 1 and 2 of the functional paper. The papermaking materials of the No. 1 and No. 2 conditions had the same composition rate. Here, GFSE-X (grapefruit seed extracts-X) was a natural antibacterial agent for giving antibacterial properties to the paper, and made of grapefruit seed extracts.

Table 2. Mixing Rates of Composition of Outer Sheet (unit: %)

|  | Mulberry | Ocher | AKD | Ca-PAM | GFSE-X |
|---|---|---|---|---|---|
| No. 1 | 83.48 | 15 | 0.5 | 0.02 | 1 |
| No. 2 | | | | | |
| Note: The unit, %, is based on the oven-dried weight (g) of mulberry fibers. | | | | | |

In a papermaking process, a paper material was prepared in a rectangular aquatic papermaker as shown in Tables 1 and 2, paper material suspension was poured into the rectangular aquatic papermaker, the resulting substance was evenly mixed in a baffler, and a web was formed by pumping out water. An excessive amount of water was removed from the web through a papermaking press, and the web was completely dried through a drum dryer.

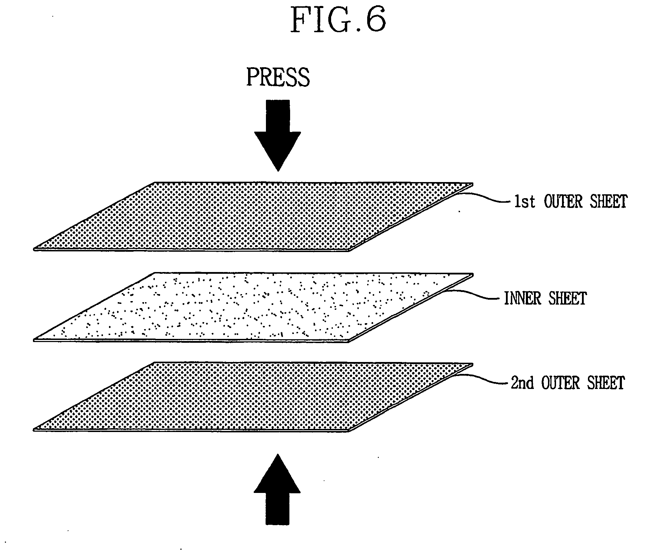

In a paper combining process of the functional paper, as shown in Fig. 6, the second outer sheet containing mulberry fibers and ocher was made under the papermaking conditions No. 1 and No. 2, the inner sheet containing hardwood kraft pulp and fine powder was made and put on the second outer sheet, and the first outer sheet containing mulberry fibers and ocher was made and put on the inner sheet. The three sheets of paper were put on the papermaking press, pressed for 5 minutes under the pressure of 3.5kgf/cm$^2$, and completely dried in the drum dryer at a temperature of 105$\pm$2°C.

Six sheets of paper (basis weight : 70g/m$^2$) were prepared under the conditions No. 1 and No. 2, and physical properties thereof such as tensile strength, tear strength, burst strength, thickness, air resistance, WVTR and heat transfer performance were measured, respectively.

Physical Property of Functional Paper

Tensile strength, tear strength and burst strength of the functional paper were measured under TAPPI Standard T 220.

Table 3 shows the measurement results of the physical properties of the functional paper made of mulberry fibers, hardwood kraft pulp and ocher. In comparison with the physical properties of the paper of the invention, physical properties of paper of Kumhwang Paper and paper (L-1 and F-1) of Mitsubishi Paper in Japan are listed as control groups.

Table 3. Physical Properties of Functional Paper

|  | Basis Weight (g/m$^2$) | Tensile strength (N · m/g) | Tear strength (mN · m$^2$/g) | Burst strength (kPa · m$^2$/g) | Thickness ($\mu$m) |
|---|---|---|---|---|---|
| No.1 | 63.20 | 777.43 | 1114.04 | 4.50 | 123 |
| No.2 | 61.44 | 545.79 | 993.74 | 4.47 | 129 |
| L-1(Japan) | 66.27 | 457.72 | 794.99 | 3.65 | 77.3 |
| F-1(Japan) | 42.60 | 642.67 | 402.72 | 2.84 | 57.7 |
| Kumhwang Paper | 77.48 | 422.53 | 1406.93 | 1.68 | 108 |
| Optimum Range | >70 | 450~800 | 990~1115 | 2.5~6.0 | >100 |

The paper of the invention had more excellent tensile strength, tear strength and burst strength than the paper of Kumhwang Paper and the paper of Mitsubishi Paper. It seemed that the hardwood kraft pulp and fine powder of the inner sheet facilitated inter-fiber hydrogen coupling and finally contributed to improvements of the physical properties of the paper.

The paper of the invention had larger thickness than that of Mitsubishi Paper. The thickness of the paper was increased because the paper was prepared in the laboratory scale under the weaker papermaking conditions than the real field conditions. For example, the paper of Kumhwang Paper had a basis weight of about 78g/m$^2$, and the paper of the invention had a basis weight of 61 to 64g/m$^2$. However, the paper of Kumhwang Paper had a thickness of 108$\mu$m, and No. 1 and No. 2 had a thickness of about 120$\mu$m. That is, the paper of the invention had a smaller basis weight but a larger thickness, which might result from differences in dehydrating pressure and pressing pressure during the papermaking process. Used materials might cause such differences. However, differently from the paper of Kumhwang Paper containing only mulberry fibers and ocher, the present invention used hardwood kraft pulp as the inner sheet, which would be advantageous in reduction of thickness. It was because the hardwood kraft pulp was much smaller in bulk than the mulberry fibers. Therefore, it was expected to produce much thinner paper in the real process by using the paper material composition mixing rate of the invention.

The optimum ranges of the physical strength of the functional paper were 450 to 800N · m/g of tensile strength, 990 to 1115mN · m$^2$/g of tear strength, and 2.5 to 6.0kPa · m$^2$/g of burst strength. Such optimum ranges were determined by selecting the highest and lowest values of the physical properties of each paper specimen in consideration of anisotropic properties of the paper.

Air Resistance and WVTR

Air resistance was measured under TAPPI Standard T 460 by using a Messmer PPS air resistance measuring apparatus. In the Messmer PPS air resistance measurement, the air resistance measuring apparatus aspirated 100mL of air into paper pressed under a pressure of 0.5kgf/cm$^2$, and obtained the time (sec) of air completely passing through the paper. Dense paper had high air resistance and loose paper had very low air resistance. That is, when an air resistance value increased, it took a long time for a certain amount of air to pass through the paper in the z-direction of the paper, and when the air resistance value decreased, the certain amount of air easily passed through the paper in the z-direction of the paper.

The WVTR of the functional paper was measured under TAPPI Standard T 448, and represented by the following formula:

$$WVTR\ (g/m^2 \cdot D) = \frac{24x}{Ay}$$

WVTR (g/m2 · D) = Water Vapor Transmission Rate

*x= moisture gain in grams for the time period y*

*y = time in hours for the moisture gain x*

*A = exposed area of a specimen, $m^2$*

Table 4 shows the measurement results of the air resistance and WVTR of the functional paper of the invention, the paper of Mitsubishi Paper and the paper of Kumhwang Paper.

Table 4. Air Resistance and WVTR of Functional Paper

|  | WVTR (g/m$^2$ Day) | Air Resistance (sec) |
|---|---|---|
| Anhydrous CaCl$_2$ As a desiccant | 3,100 | N/A |
| No.1 | 624 | 1030 |
| No.2 | 608 | 1186 |
| Kumhwang Paper | 456 | 820 |
| L-1(Japan) | 408 | 3538 |
| F-1(Japan) | 816 | 1284 |

Anhydrous CaCl$_2$ used as a desiccant of a WVTR measuring apparatus had been widely used in daily life. The WVTR of anhydrous CaCl$_2$ was about 3100g/m$^2 \cdot$ D. The WVTR of paper No. 1 and No. 2 produced in the aforementioned experimental conditions was 600g/m$^2 \cdot$ D, which was lower than that of anhydrous CaCl$_2$ by five times. Nevertheless, paper No. 1 and No. 2 showed preferable air resistance and WVTR. It was easily recognized that existence or absence of a barrier film for preventing transmission of moisture on anhydrous CaCl$_2$ had large effects on water vapor transmission efficiency.

The flow of air passing through the paper film was known as being considerably influenced by a number of voids formed by a paper network. Accordingly, when a large number of voids existed, air easily flowed in the z-direction of the paper and moisture was rapidly transmitted. That is, when air permeability increased, the WVTR also increased. For example, L-1 having high air resistance among the specimens of Table 4 showed air resistance of about 3500 seconds, but a very low WVTR of 408g/m$^2 \cdot$ D.

In general, it is very difficult to produce paper having both constant air resistance and optimum WVTR. Therefore, in order to prevent gases from being transmitted in the z-direction of the paper, a mechanical process such as beating must be performed on paper fibers to facilitate fibrillation of the fibers, thereby inducing firm coupling between the fibers. In addition, the voids of the paper must be filled with artificially-made fine fibers. To improve the water vapor transmission efficiency, moisture must be smoothly transmitted through the fine voids of paper. Accordingly, factors lowering the water vapor transmission efficiency in the paper need to be removed.

For this, the present invention improves the water vapor transmission efficiency by putting the first and second outer sheets made of mulberry fibers and ocher on both surfaces of the inner sheet made of chemical pulp (kraft pulp). Traditionally, the Korean paper made of mulberry fibers have been used as window paper and currently as wall paper because of excellent ventilation and hygroscopicity. Such effects of the mulberry fibers are applied to the present invention to improve the water vapor transmission efficiency.

The fine fibers (20mL CSF) were used for the inner sheet over about 70% to improve the air resistance, so that large specific surfaces of the fine fibers might interrupt transmission of moisture passing through the paper film. In addition, the fine fibers made of natural pulp fibers were comprised of cellulose having a plurality of hydrophile hydroxyl groups (-OH), and thus easily coupled to moisture passing through the paper film. In order to facilitate transmission of moisture, the surfaces of the fibers needed to be hydrophobic. Alkyl Ketene Dimer (AKD) was used for this purpose. The WVTR of the AKD-processed functional paper was more improved than that of the non-processed functional paper by about 5.6%. A contact angle formed on the surface of the functional paper was 98.9. It implied that the surfaces of the paper fibers were sufficiently hydrophobic to have very low affinity to peripheral moisture.

As a result, as shown in Table 4, the paper No. 1 and No. 2 of the invention satisfied both the WVTR and air resistance differently from the paper of Kumhwang Paper and the paper (L-1) of Mitsubishi Paper.

Heat Transfer Efficiency

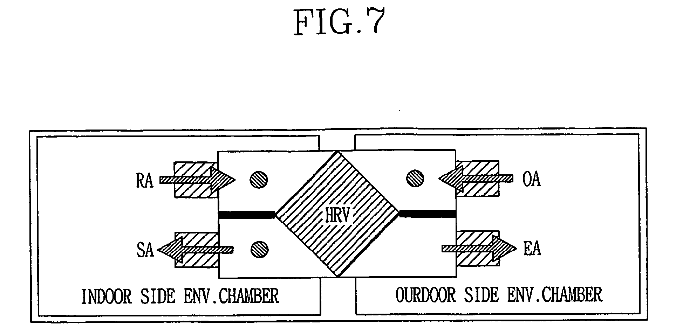

Heat transfer efficiency of the functional paper was measured under JIS B 8628. Fig. 7 shows a heat transfer efficiency measuring apparatus. Referring to Fig. 7, the measurement principle was divided into an indoor side environment chamber and an outdoor side environment chamber from a heat exchanger HRV of a ventilator. Here, air flowing from the indoor side environment chamber to the ventilator was defined as return air RA, air flowing from the ventilator to the indoor side environment chamber was defined as supply air SA, air flowing from the ventilator to the outdoor side environment chamber was defined as exhaust air EA, and air flowing from the outdoor side environment chamber to the ventilator was defined as outdoor air OA, respectively. Enthalpy values of the OA, RA and SA were obtained by measuring a dry bulb temperature and a wet bulb temperature of each air, and the heat transfer exchange efficiency was calculated by the following formula:

$$\eta_I \ (\%) \ = \ \frac{i_{OA} \ - \ i_{SA}}{i_{OA} \ - \ i_{RA}} \ \times \ 100 \qquad i : \textbf{Enthalpy} \ (kcal/kg)$$

Table 5 shows the test conditions of the JIS B 8628.

Table 5. Test Conditions (°C)

|  | Indoor side | | Outdoor side | |
|---|---|---|---|---|
|  | Dry bulb temperature | Wet bulb temperature | Dry bulb temperature | Wet bulb temperature |
| Cooling | 27±1 | 20±2 (52.7%11.7g/kg') | 35±1 | 29±2 (64%/23g/kg') |
| Heating | 20±1 | 14±2 (51.6%/7.5g/kg') | 5±1 | 2±2 (58.5%/3.15g/kg') |

In Table 5, 'Cooling' implies summer ventilating conditions and 'Heating' implies winter ventilating conditions. Table 6 shows the heat transfer exchange efficiency measured in the heat exchanger using the functional paper of the invention under the aforementioned test conditions.

Table 6. Heat Transfer Exchange Efficiency

|  | Products of Invention | Comparative Examples (Mitsubishi) |
|---|---|---|
| Sensible heat | (H) 80±3%<br>(L) 90±3% | 70±3% |
| Enthalpy | (H) 70±3%<br>(L) 77±3% | 45±3% |

As shown in Table 6, when the ventilator used the functional paper of the invention, the heat transfer exchange efficiency (based on enthalpy as mentioned above) was over 70% regardless of an air volume H or L. The functional paper of the invention showed more satisfactory result than that of Mitsubishi Paper.

Antibacterial Property of Functional Paper

The antibacterial property of the functional paper to microorganisms was measured according to a paper disc plate method. That is, suspension was evenly inoculated into a germ culture flat plate medium, and a paper disc of the sterilized functional paper specimen (8mm i.d., heated for 1 hour in 100 dry oven) was adhered to the surface of the flat plate medium. It was cultivated in 30°C incubator for 24 to 48 hours. Growth of germs in control groups was confirmed, and a diameter (mm) of a clear zone around the paper disc was measured, to compare antibacterial effects. Known clusters used for the antibacterial test were *Staphylococcus aureus* and *E. coli.*

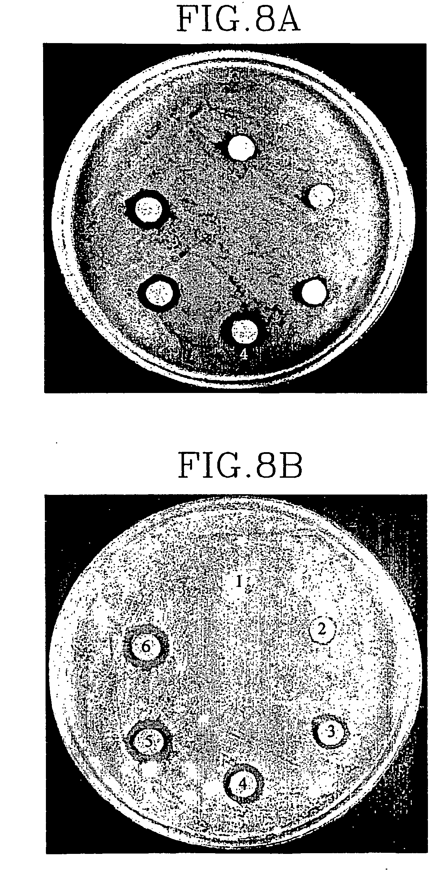

In the present invention, the GFSE-X made of grapefruit seed extracts was added as an antibacterial agent in production of the functional paper. Figs. 8A and 8B illustrate the antibacterial test results of the GFSE-X processed functional paper. Each drawing shows 1 (control), 2(3%), 3(6%), 4(9%), 5(12%) and 6(15%). Here, when *E. coli* was added over 6 % of oven-dried weight of pulp fibers, inhibitory circles were formed around the paper specimens (Fig. 8A), and when *Staphylococcus aureus* was added over 3%, inhibitory circles were formed around the paper specimens (Fig. 8B). The more the antibacterial agent was added, the more the antibacterial performance of the paper was improved.

Ocher can be used as the antibacterial agent, or other known antibacterial agents harmless to human bodies can also be used.

Characteristics of Surface Structure

FE-SEM of JEOL Ltd. was used to photograph the surface structure of the functional paper. Magnifications were X200 and X1000.

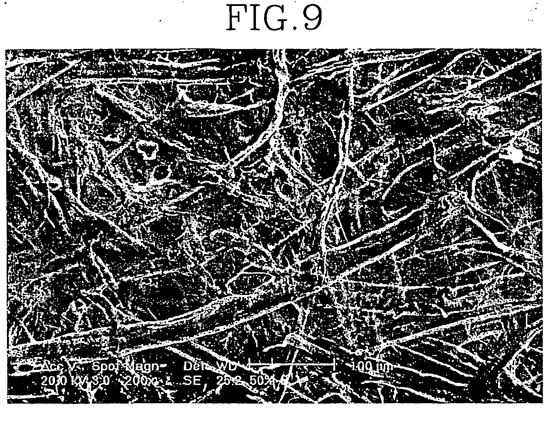

Fig. 9 is an SEM photograph of the inner sheet of the functional paper. As shown in Fig. 9, when a large amount of fine powder beaten to 20mL CSF was mixed with the hardwood kraft pulp fibers beaten to 240mL CSF, large voids formed between the fibers almost disappeared. It might be a primary factor for improving the air resistance of the functional paper.

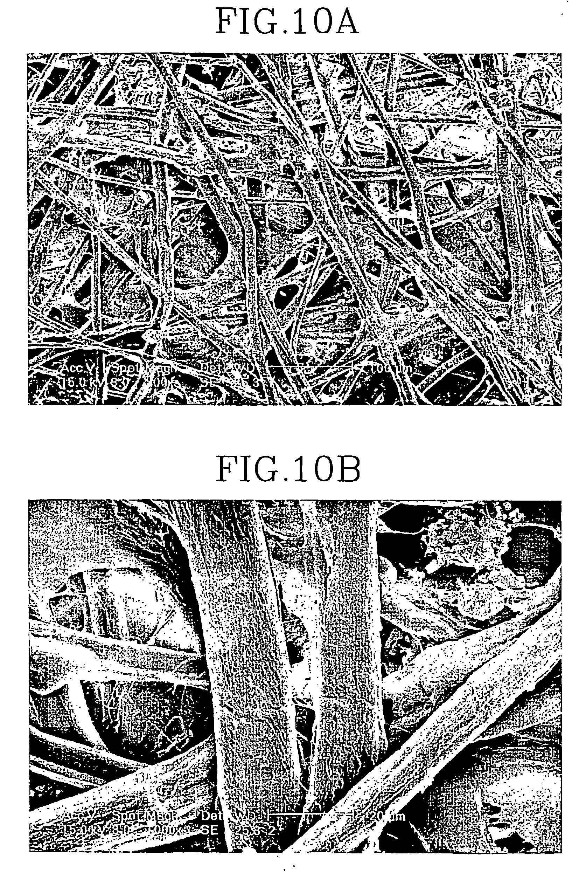

Figs. 10A and 10B are SEM photographs of the surface of the outer sheet of the functional paper. Fig. 10A shows large voids formed on the surface of the outer sheet of the functional paper, and Fig. 10B shows a retention state of the ocher and GFSE-X powder added to the fiber network as antibacterial agent elements. It seemed that the particles were settled on the fiber network due to the operation of the chain polymer retention aids such as Ca-PAM rather than held due to the natural filtering operation during the web forming process. The settled antibacterial agent elements and ocher elements contributed to manifestation of the antibacterial performance of the functional paper.

The present invention provides the functional paper having excellent air resistance, water vapor transmission efficiency and heat transfer efficiency, which can be used as a material of heat transfer plates and/or pleat sheets for the heat exchanger of the ventilator. In addition, the functional paper can be provided with the antibacterial performance.

Although the preferred embodiments of the present invention have been described, it is understood that the present invention should not be limited to these preferred embodiments but various changes and modifications can be made by one skilled in the art within the scope of the present invention as hereinafter claimed.

## Claims

1. Functional paper for a heat exchanger of a ventilator, prepared by putting an inner sheet made of 10 to 40% of bleached wood chemical pulp having freeness of 200 to 300mL CSF and 60 to 90% of bleached wood chemical pulp fine powder having freeness below 100mL CSF between outer sheets made of mulberry fibers.

2. The functional paper of claim 1, wherein the freeness of the bleached wood chemical pulp ranges from 200 to 250mL CSF.

3. The functional paper of claim 2, wherein the inner sheet contains 25 to 35% of bleached wood chemical pulp.

4. The functional paper of claim 1, wherein the freeness of the bleached wood chemical pulp fine powder ranges from 15 to 50mL CSF.

5. The functional paper of claim 4, wherein the freeness of the bleached wood chemical pulp fine powder ranges from 15 to 25mL CSF.

6. The functional paper of claim 5, wherein the inner sheet contains 65 to 75% of bleached wood chemical pulp fine powder.

7. The functional paper of any one of claims 1 to 6, wherein the pulp is bleached hardwood kraft pulp.

8. The functional paper of claim 7, wherein the inner and outer sheets further comprise 0.02 to 0.04% of known retention aids.

9. The functional paper of claim 8, wherein the outer sheets further comprise an antibacterial agent.

10. The functional paper of claim 9, wherein the antibacterial agent is made of ocher and added in the range of 10 to 15%.

11. The functional paper of claim 9, wherein the antibacterial agent is made of grapefruit seed extracts and added in the range of 3 to 9%.

**12.** The functional paper of claim 7, wherein the inner sheet further comprises 0.3 to 0.8% of Alkyl Ketene Dimer.

**13.** A heat exchanger of a ventilator, comprising: heat transfer plates, first air paths which externally-discharged indoor air passes through and second air paths which internally-sucked outdoor air passes through being stacked on the heat transfer plates at predetermined intervals;
first pleat sheets adhered to the first air paths, for obtaining passing spaces of outdoor air; and
second pleat sheets adhered to the second air paths, for obtaining passing spaces of indoor air,
wherein at least one of the heat transfer plates, the first pleat sheets and the second pleat sheets is functional paper according to claim 1, whereby the paper is prepared by putting an inner sheet made of 20 to 40% of bleached wood chemical pulp having freeness of 200 to 300mL CSF and 60 to 80% of bleached wood chemical pulp fine powder having freeness below 100mL CSF between outer sheets made of mulberry fibers.

## Patentansprüche

**1.** Funktionelles Papier für einen Wärmetauscher eines Ventilators, hergestellt durch Anordnen eines Innenblatts, das zu 10 bis 40% aus gebleichtem Holzzellstoff mit einem Mahlgrad von 200 bis 300 mL CSF (Canadian Standard Freeness) und zu 60 bis 90% aus einem Feinpulver aus gebleichtem Holzzellstoff mit einem Mahlgrad unter 100 mL CSF besteht, zwischen Außenblättern, die aus Maulbeerbaumfasern bestehen

**2.** Funktionelles Papier nach Anspruch 1, wobei der Mahlgrad des gebleichten Holzzellstoffs von 200 bis 250 mL CSF reicht

**3.** Funktionelles Papier nach Anspruch 2, wobei das Innenblatt zu 25 bis 35% gebleichten Holzzellstoff enthält

**4.** Funktionelles Papier nach Anspruch 1, wobei der Mahlgrad des Feinpulvers aus gebleichtem Holzzellstoff von 15 bis 50 mL CSF reicht

**5.** Funktionelles Papier nach Anspruch 4, wobei der Mahlgrad des Feinpulvers aus gebleichtem Holzzellstoff von 15 bis 25 mL CSF reicht.

**6.** Funktionelles Papier nach Anspruch 5, wobei das Innenblatt zu 65 bis 75% Feinpulver aus gebleichtem Holzzellstoff enthält

**7.** Funktionelles Papier nach irgendeinem der Ansprüche 1 bis 6, wobei der Zellstoff gebleichter Hartholz-Kraftzellstoff ist

**8.** Funktionelles Papier nach Anspruch 7, wobei die Innen- und Außenblätter ferner zu 0,02 bis 0,04% bekannte Retentionshilfsmittel umfassen.

**9.** Funktionelles Papier nach Anspruch 8, wobei die Außenblätter ferner ein antibakterielles Mittel umfassen

**10.** Funktionelles Papier nach Anspruch 9, wobei das antibakterielle Mittel aus Ocker besteht und im Bereich von 10 bis 15% zugesetzt ist

**11.** Funktionelles Papier nach Anspruch 9, wobei das antibakterielle Mittel aus Extrakten von Pampelmusensamen besteht und im Bereich von 3 bis 9% zugesetzt ist.

**12.** Funktionelles Papier nach Anspruch 7, wobei das Innenblatt ferner zu 0,3 bis 0,8% Alkylketendimer umfasst.

**13.** Wärmetauscher eines Ventilators, Folgendes umfassend Wärmeübertragungsplatten, erste Luftpfade, durch welche nach außen ausgelassene Innenraumluft strömt, und zweite Luftpfade, durch welche von innen angesaugte Außenluft strömt, wobei die Luftpfade in vorbestimmten Abständen auf den Wärmeübertragungsplatten gestapelt sind; erste gefaltete Blätter, die den ersten Luftpfaden zugeordnet sind, um Durchlassräume für die Außenluft zu erhalten; und
zweite gefaltete Blätter, die den zweiten Luftpfaden zugeordnet sind, um Durchlassräume für die Innenluft zu erhalten, wobei mindestens eine bzw eines der Wärmeübertragungsplatten, der ersten gefalteten Blätter und der zweiten gefalteten Blätter ein funktionelles Papier nach Anspruch 1 ist, wobei das Papier hergestellt ist durch Anordnen eines Innenblatts, das zu 20 bis 40% aus gebleichtem Holzzellstoff mit einem Mahlgrad von 200 bis 300 mL CSF und zu 60 bis 80% aus einem Feinpulver aus gebleichtem Holzzellstoff mit einem Mahlgrad unter 100 mL CSF besteht, zwischen Außenblättern, die aus Maulbeerbaumfasern bestehen.

**Revendications**

1. Papier fonctionnel pour un échangeur de chaleur d'un ventilateur, préparé en mettant une feuille intérieure constituée de 10 à 40% de pâte chimique de bois blanchie ayant un indice d'égouttage de 200 à 300 ml CSF et 60 à 90% de poudre fine de pâte chimique de bois blanchie ayant un indice d'égouttage inférieur à 100 ml CSF entre des feuilles extérieures constituées de fibres de mûrier

2. Papier fonctionnel selon la revendication 1, dans lequel l'indice d'égouttage de la pâte chimique de bois blanchie est dans la plage de 200 à 250 ml CSF

3. Papier fonctionnel selon la revendication 2, dans lequel la feuille intérieure contient 25 à 35% de pâte chimique de bois blanchie

4. Papier fonctionnel selon la revendication 1, dans lequel l'indice d'égouttage de la poudre fine de pâte chimique de bois blanchie est dans la plage de 15 à 50 ml CSF

5. Papier fonctionnel selon la revendication 4, dans lequel l'indice d'égouttage de la poudre fine de pâte chimique de bois blanchie est dans la plage de 15 à 25 ml CSF

6. Papier fonctionnel selon la revendication 5, dans lequel la feuille intérieure contient 65 à 75% de poudre fine de pâte chimique de bois blanchie

7. Papier fonctionnel selon l'une quelconque des revendications 1 à 6, dans lequel la pâte est une pâte kraft de bois dur blanchie

8. Papier fonctionnel selon la revendication 7, dans lequel les feuilles intérieure et extérieures comprennent en outre 0,02 à 0,04% d'adjuvants de rétention connus

9. Papier fonctionnel selon la revendication 8, dans lequel les feuilles extérieures comprennent en outre un agent antibactérien

10. Papier fonctionnel selon la revendication 9, dans lequel l'agent antibactérien est constitué d'ocre et ajouté dans la plage de 10 à 15%

11. Papier fonctionnel selon la revendication 9, dans lequel l'agent antibactérien est constitué d'extraits de pépins de pamplemousse et ajouté dans la plage de 3 à 9%.

12. Papier fonctionnel selon la revendication 7, dans lequel la feuille intérieure comprend en outre 0,3 à 0,8% de dimère d'alkyle cétène.

13. Échangeur de chaleur d'un ventilateur, comprenant : des plaques de transfert de chaleur, des premiers chemins d'air à travers lesquels passe l'air intérieur déchargé à l'extérieur et des deuxièmes chemins d'air à travers lesquels passe l'air extérieur aspiré de l'intérieur étant empilés sur les plaques de transfert de chaleur à intervalles prédéterminées ;
des premières feuilles plissées collées aux premiers chemins d'air pour obtenir des espaces de passage d'air extérieur ; et
des deuxièmes feuilles plissées collées aux deuxièmes chemins d'air pour obtenir des espaces de passage d'air intérieur,
dans lequel au moins une des plaques de transfert de chaleur, des premières feuilles plissées et des deuxièmes feuilles plissées est un papier fonctionnel selon la revendication 1, dans lequel le papier est préparé en mettant une feuille intérieure constituée de 20 à 40% de pâte chimique de bois blanchie ayant un indice d'égouttage de 200 à 300 ml CSF et 60 à 80% de poudre fine de pâte chimique de bois blanchie ayant un indice d'égouttage inférieur à 100 ml CSF entre des feuilles extérieures constituées de fibres de mûrier.

# FIG.1

# FIG.2

# FIG.3

# FIG.4

# FIG.5

# FIG.6

PRESS

1st OUTER SHEET

INNER SHEET

2nd OUTER SHEET

# FIG.7

| | |
|---|---|
| RA | OA |
| HRV | |
| SA | EA |
| INDOOR SIDE ENV.CHAMBER | OURDOOR SIDE ENV.CHAMBER |

# FIG.8A

# FIG.8B

# FIG.9

EP 1 702 182 B1

# FIG.10A

# FIG.10B

18